# DEMANDE DE BREVET EUROPEEN

(11) **EP 2 990 633 A1**
(43) Date de publication de la demande: **02.03.2016**
(21) Numéro de dépôt: 15183105.4
(22) Date de dépôt: 31.08.2015
(51) Int. Cl.: F02M 25/06, F02D 41/00

(54) **CAPTEUR POUR COMPOSANT DE VEHICULE AUTOMOBILE**

(30) Priorité: 01.09.2014 FR 1458165
(71) Demandeur: Valeo Systèmes de Contrôle Moteur, 95800 Cergy Saint Christophe (FR)
(72) Inventeur: MARTIN, Nicolas, 78600 Maisonslafitte (FR); HODEBOURG, Grégory, Sartrouville 78500 (FR)
(74) Mandataire: Tran, Chi-Hai

(57) **Abrégé**

L'invention se rapporte à un capteur notamment pour un composant de véhicule automobile, ce capteur étant capable de mesurer une propriété physique d'un composant:
- avec une première sensibilité lorsque la propriété physique est dans une plage de grande sensibilité,
- avec une deuxième sensibilité lorsque la propriété physique est dans une plage de faible sensibilité, la première sensibilité étant supérieure à la deuxième sensibilité.

## Description

L'invention se rapporte notamment à un ensemble de régulation fluidique d'une vanne, notamment d'une vanne de contrôle moteur, dotée d'un volet de dosage et d'un volet d'aiguillage.

Le volet de dosage est généralement apte à pivoter dans une première voie pour faire varier la section de passage des gaz, et le volet d'aiguillage est conçu pour pivoter entre une première position d'obturation d'une deuxième voie et une deuxième position d'obturation d'une troisième voie. Une telle vanne peut, par exemple, être placée dans une boucle de gaz EGR (de l'anglais *Exhaust Gas Recirculation)* en aval d'un refroidisseur, le volet de dosage régulant le débit des gaz dans ladite boucle, et le volet d'aiguillage étant apte à obturer, soit une voie d'accès audit refroidisseur, soit un canal de dérivation contournant ce refroidisseur. La vanne peut comprendre un volet de dosage et un volet d'aiguillage pilotés par un mécanisme d'actionnement amélioré desdits volets.

Le brevet US2010/0199957 décrit une vanne EGR placée en amont d'un refroidisseur, ladite vanne possédant un premier volet de dosage destiné à contrôler le débit des gaz dans la boucle EGR et un deuxième volet d'aiguillage placé en aval dudit volet de dosage permettant, soit de faire passer les gaz par le refroidisseur, soit de dévier les gaz dans un canal de dérivation afin de contourner ledit refroidisseur. La principale caractéristique de ladite vanne est qu'elle met en oeuvre un mécanisme d'actionnement qui est commun aux deux volets. Le principal inconvénient engendré par un tel mécanisme est qu'il comprend un nombre important de pièces de forme particulière, interagissant entre elles de façon complexe, multipliant ainsi les risques de mauvais fonctionnement, voire de pannes.

De manière connue, pour commander la vanne, un capteur de position est utilisé pour obtenir la position du mécanisme d'actionnement pour permettre la commande de la vanne.

L'invention vise à proposer un capteur qui permet de mesurer une grandeur physique avec une sensibilité optimisée.

L'invention concerne ainsi un capteur, notamment pour un composant de véhicule automobile, ce capteur étant capable de mesurer une propriété physique d'un composant:
- avec une première sensibilité lorsque la propriété physique est dans une plage de grande sensibilité,
- avec une deuxième sensibilité lorsque la propriété physique est dans une plage de faible sensibilité, la première sensibilité étant supérieure à la deuxième sensibilité.

Grâce à l'invention, il est possible de sélectionner la ou les plages dans lesquelles il est souhaitable d'avoir des mesures avec une grande sensibilité, par exemple là où une commande doit se reposer sur des mesures précises, et la ou les autres plages dans lesquelles il n'est pas nécessaire d'avoir de grande sensibilité, par exemple là où la commande ne nécessite pas de mesures précises. Autrement dit, l'invention privilégie, en ce qui concerne leur précision, les mesures dans une certaine plage et sacrifie les mesures dans une autre plage. Le capteur est ainsi mieux utilisé sur les plages d'intérêt que par exemple un capteur qui fonctionne en délivrant une sensibilité constante.

Dans un exemple de réalisation de l'invention, le capteur est agencé pour générer deux plages de grande sensibilité et une plage de faible sensibilité.

Préférentiellement, les plages de grande sensibilité sont de part et d'autre de la plage de faible sensibilité.

Les plages de grandes sensibilités peuvent présenter la même sensibilité de mesure , ou en variante l'une au moins des plages de grande sensibilité présente une sensibilité supérieure à celle de l'autre plage de grande sensibilité.

Si on le souhaite, la largeur des plages de grande sensibilité est supérieure à celle de la plage de faible sensibilité.

En variante, la largeur d'au moins une des plages de grande sensibilité est inférieure à celle de la plage de faible sensibilité.

Avantageusement, la valeur de la grande sensibilité est au moins deux fois, notamment au moins quatre fois plus grande que celle de la faible sensibilité.

Le capteur peut être agencé pour délivrer un signal de type analogique.

Par exemple le capteur peut être agencé pour délivrer un signal de sortie qui est une tension électrique.

En variante, le capteur est agencé pour délivrer des signaux de type numérique.

De préférence, le signal délivré par le capteur évolue de façon linéaire à l'intérieur des plages de mesure.

Dans un exemple de réalisation de l'invention, la propriété physique mesurée par le capteur est une position d'un dispositif d'actionnement.

Par exemple, la propriété physique mesurée par le capteur est une position angulaire.

Le cas échéant, la position angulaire varie entre deux bornes comprises entre 0 et 360°.

En variante, la propriété physique mesurée par le capteur est une position linéaire.

L'invention a également pour objet un ensemble de régulation fluidique d'une vanne ayant au moins trois voies, notamment pour véhicule automobile, l'ensemble comprenant :
- un organe de dosage mobile agencé pour sélectivement ouvrir ou obturer une première des trois voies,
- un organe d'aiguillage mobile agencé pour obturer sélectivement une deuxième ou une troisième des trois voies,
- un dispositif d'actionnement des deux organes,
- au moins un capteur capable de mesurer une propriété physique du dispositif d'actionnement :
   i. avec une première sensibilité lorsque la propriété physique est dans une plage de grande sensibilité,
   ii. avec une deuxième sensibilité lorsque la propriété physique est dans une plage de faible sensibilité, la première sensibilité étant supérieure à la deuxième sensibilité.

Préférentiellement, l'ensemble comporte des première et deuxième plages de grande sensibilité, et l'ensemble est caractérisé par le fait que :
- la première plage de grande sensibilité s'étend de la position du dispositif d'actionnement correspondant à la position d'ouverture maximale de l'organe de dosage, jusqu'à la position correspondant à la position fermée de l'organe de dosage, l'organe d'aiguillage étant immobile dans cette plage et obturant la deuxième voie,
- la deuxième plage de grande sensibilité s'étend de la position du dispositif d'actionnement correspondant à la position fermée de l'organe de dosage jusqu'à la position correspondant à la position d'ouverture maximale de l'organe de dosage, l'organe d'aiguillage étant immobile dans cette plage et obturant la troisième voie,
- la plage de faible sensibilité correspond à la plage où l'organe de dosage est en position d'obturation de la première voie, l'organe d'aiguillage passant de la position d'obturation de la deuxième voie à la position d'obturation de la troisième voie, cette plage de faible sensibilité étant de préférence entre les deux plages de grande sensibilité.

Dans un exemple de mise en oeuvre de l'invention, le dispositif d'actionnement comporte au moins une roue d'actionnement mobile en rotation pour l'actionnement commun de l'organe de dosage et de l'organe d'aiguillage.

L'invention concerne aussi une vanne comportant l'ensemble de régulation fluidique tel que décrit ci dessus.

L'invention concerne également un procédé de mesure d'une propriété physique d'un composant, ce procédé comportant les étapes suivantes :
- mesurer la propriété physique avec une première sensibilité lorsque la propriété physique est dans une plage de grande sensibilité,
- mesurer la propriété physique avec une deuxième sensibilité lorsque la propriété physique est dans une plage de faible sensibilité, la première sensibilité étant supérieure à la deuxième sensibilité.

Dans un exemple de mise en oeuvre de l'invention, la propriété physique mesurée est une position angulaire.

Par exemple la propriété physique mesurée est une position d'une vanne.

Avantageusement, une calibration individuelle des caractéristiques du capteur est réalisée afin que la tension délivrée pour chacune des positions correspondant à une borne des différentes plages de sensibilité définies soit constante.

L'invention sera mieux comprise en se référant aux figures.

L' ensemble de régulation fluidique décrit ci-dessus peut comporter :
- un organe de dosage mobile agencé pour sélectivement ouvrir ou obturer une première des trois voies,
- un organe d'aiguillage mobile agencé pour obturer sélectivement une deuxième ou une troisième des trois voies,
- un dispositif d'actionnement des deux organes,
l'ensemble étant agencé de manière à ce que, dans une première plage de fonctionnement, le dispositif d'actionnement actionne l'organe d'aiguillage tout en laissant l'organe de dosage immobile.

Ainsi, avantageusement, la section d'ouverture dans la première voie, au niveau de l'organe de dosage, est maintenue constante pendant l'actionnement de l'organe d'aiguillage. Le débit du fluide circulant dans la vanne est ainsi maintenu constant pendant la sélection de l'une des deuxième et troisième voies.

Au sens de la présente demande, on entend par obturation, une obturation totale ou une obturation quasi-totale. Une obturation totale correspond à une obturation dans laquelle aucun fluide ne passe. Une obturation quasi-totale correspond à une obturation dans laquelle un écoulement résiduel peut se produire notamment à cause d'un jeu de fonctionnement de l'organe de dosage ou d'aiguillage.

La vanne peut comporter :
- un corps délimitant une première voie, une deuxième voie et une troisième voie, les voies débouchant dans un espace intérieur commun,
- un organe de dosage mobile agencé pour obturer la première voie,
- un organe d'aiguillage mobile agencé pour obturer sélectivement la deuxième ou la troisième des trois voies,
- un dispositif d'actionnement commun des deux organes,
la vanne étant agencée de manière à ce que, dans une première plage de fonctionnement, le dispositif d'actionnement actionne l'organe d'aiguillage tout en laissant l'organe de dosage immobile.

De préférence, la vanne peut être placée dans une boucle EGR comprenant un refroidisseur et un canal de dérivation contournant ledit refroidisseur, l'organe de dosage régulant le flux gazeux dans ladite boucle EGR et l'organe d'aiguillage obturant, soit une voie d'accès audit refroidisseur, soit ledit canal de dérivation.

La boucle EGR peut être une boucle haute pression ou basse pression.

On donne ci-après, une description détaillée, d'un mode de réalisation préféré d'un ensemble de régulation fluidique d'une vanne selon l'invention, en se référant aux figures 1 à 12.
- La figure 1 est une vue schématique d'une boucle EGR basse pression dans laquelle peut être utilisée la vanne,
- La figure 2 est un diagramme montrant la position angulaire du volet de dosage et du volet d'aiguillage en fonction de la position angulaire de la roue d'actionnement,
- La figure 3 est une vue en perspective de l'ensemble de régulation fluidique selon l'invention,
- Les figures 4, 6, 8 et 10 sont quatre vues de dessous de l'ensemble de régulation fluidique d'une vanne selon l'invention à quatre stades différents de rotation de la roue d'actionnement, dans le même sens de rotation depuis la position de repos des volets de l'ensemble de régulation fluidique,
- Les figures 5, 7, 9 et 11 sont quatre vues de dessus, représentant respectivement l'ensemble de régulation fluidique selon les figures 5, 6, 8 et 10, et
- La figure 12 compare les courbes de réponse d'un capteur selon l'état de l'art et d'un capteur suivant l'invention ;

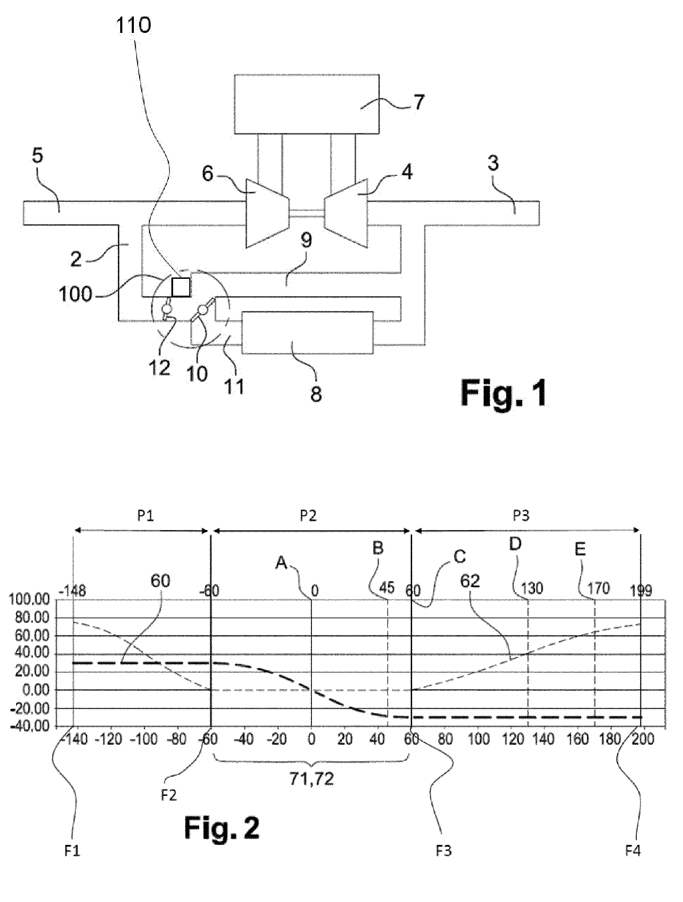

En se référant à la figure 1, une vanne 100 selon l'invention est une vanne EGR basse pression placée sur une boucle EGR reliant une ligne d'échappement 3 en aval d'une turbine 4 à un circuit d'admission 5 d'air frais en amont d'un compresseur 6, le turbocompresseur 4,6 étant par ailleurs conventionnellement connecté à un moteur thermique 7. La boucle EGR comprend la vanne 100, un refroidisseur 8 des gaz EGR et un canal de dérivation 9 desdits gaz prenant naissance en amont dudit refroidisseur 8 et débouchant dans une voie 2 de sortie de la boucle EGR, en aval de ce refroidisseur 8. La vanne 100 est une vanne trois voies comprenant un corps délimitant les voies 2, 9 et 11, ces trois voies débouchant dans un espace intérieur commun. La vanne 100 dispose d'un ensemble de régulation fluidique 1 selon l'invention. L'ensemble de régulation fluidique 1 comprend un volet de dosage 12 mobile en rotation autour d'un axe 13, ledit volet de dosage 12 réglant la section de passage des gaz dans la voie 2 donc dans la boucle EGR. L'ensemble de régulation fluidique 1 comprend également un volet d'aiguillage 10 mobile en rotation autour d'un axe 14, entre une position d'obturation du canal de dérivation 9 et une position d'obturation d'un passage 11 d'accès au refroidisseur 8. L'ensemble de régulation fluidique 1 comprend en outre un dispositif d'actionnement commun 15 pour piloter le mouvement en rotation des deux volets 10,12.

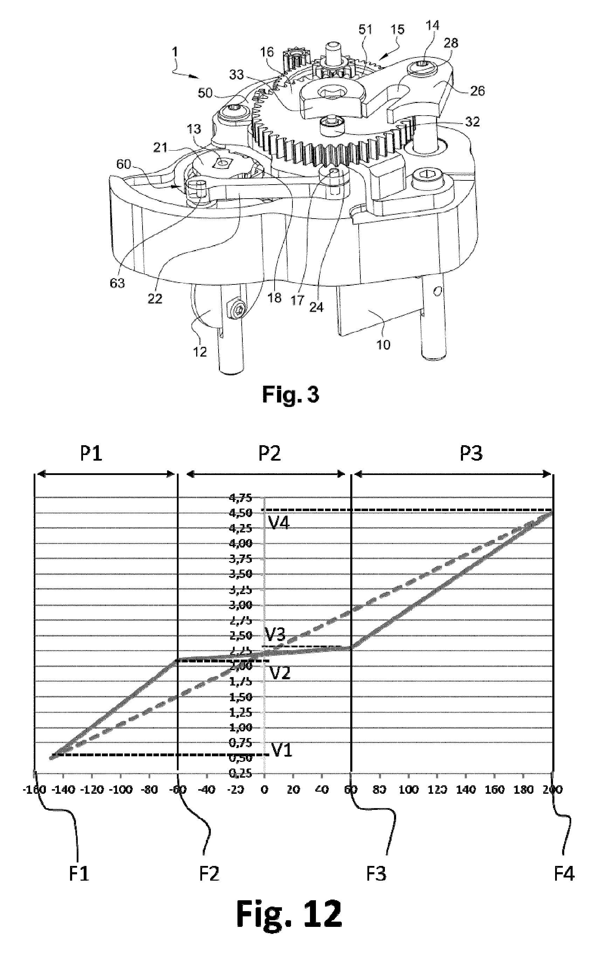

La figure 3 représente une vue en perspective de l'ensemble de régulation fluidique 1 de la vanne 100 selon l'invention. Dans l'exemple considéré, le dispositif d'actionnement 15 commun des deux volets 10, 12 comporte une roue d'actionnement 16, apte à être mise en rotation dans les deux sens au moyen d'un moteur électrique 50 engrainant sur un pignon intermédiaire 51, le pignon intermédiaire 51 engrainant sur la roue 16 d'actionnement. Le sens de rotation de ladite roue 16 est dicté par la position d'obturation que l'on souhaite affecter au volet d'aiguillage 10. Cette roue 16 pilote à la fois le pivotement du volet de dosage 12 et le pivotement du volet d'aiguillage 10 selon une cinématique synchronisée.

Dans l'exemple considéré, le dispositif d'actionnement 15 comprend un ressort de torsion 18, pour rappeler les deux volets 10, 12 dans une position de repos.

Le dispositif d'actionnement 15 comprend en outre un organe de guidage 22, 24 capable d'actionner le volet de dosage 12. Le dispositif d'actionnement 15 comporte en outre un organe d'interface 21 rigidement couplé au volet de dosage 12. Cet organe d'interface 21 est, dans l'exemple considéré, une manivelle montée à une extrémité de l'axe 13 du volet 12 et coopérant avec l'organe de guidage 22, 24 afin de permettre le pivotement du volet de dosage 12.

Dans l'exemple décrit, l'organe de guidage 22, 24 comporte un dispositif de retard 60. Dans l'exemple décrit, le dispositif de retard 60 est réalisé à l'extrémité de l'organe de guidage 22 coopérant avec l'organe d'interface 21. Le dispositif de retard 60 comporte une cavité oblongue et l'organe d'interface 21 comporte un pion 63 s'étendant dans la cavité, pour permettre au pion de coulisser à l'intérieur de la cavité. L'organe de guidage 22, 24 comporte un premier levier 24 et un deuxième levier 22 articulés en rotation entre eux, via une extrémité commune, le premier levier 24 comprenant une autre extrémité coopérant par un pivot 17 avec la roue d'actionnement 16 et le deuxième levier 22 comporte le dispositif de retard 60. Le deuxième levier 22 et la cavité oblongue s'étendent selon le même axe.

Dans l'exemple décrit, le dispositif d'actionnement 15 comprend en outre un système d'actionnement du volet d'aiguillage 10. Ce système d'actionnement comprend une pièce de guidage 32, une pièce d'interface 26 et une pièce de maintien 33 de la pièce d'interface 26. La pièce de maintien 33 et la pièce de guidage 32 sont rigidement couplées avec la roue d'actionnement 16. La pièce d'interface 26 est rigidement couplée au volet d'aiguillage 10. La pièce de guidage 32 coopère avec la pièce d'interface 26 pour faire pivoter le volet d'aiguillage 10.

La roue d'actionnement 16 coopère avec la pièce de guidage 32 par une première face de la roue 16 et la roue d'actionnement 16 est en regard de l'extrémité commune des premier 24 et deuxième 22 leviers de l'organe de guidage 2,24 par une face opposée à la première face de la roue 16.

La pièce d'interface 26, la pièce de guidage 32 et la pièce de maintien 33 sont situés en regard d'une première face de la roue d'actionnement 16. La manivelle 21 et les leviers 24 et 22 sont situés en regard d'une deuxième face, opposée à la première face, de la roue d'actionnement 16.

Une rainure borgne 28 est ménagée dans la pièce d'interface 26 et la pièce de guidage 32 repose dans la rainure borgne 28 au moins lorsque le volet d'aiguillage est dans la position de repos. Lorsque la pièce de guidage repose dans la rainure borgne 28, elle exerce ainsi, sous l'effet d'une rotation de la roue d'actionnement 16, une poussée sur la pièce d'interface 32 pour actionner le volet d'aiguillage 10.

La pièce de maintien 33 et la pièce d'interface 26 comprennent des surfaces complémentaires, de sorte que la coopération entre ces surfaces complémentaires maintient en position la pièce d'interface 26 lors d'un déplacement de la pièce de guidage 32, alors que le volet d'aiguillage 10 obture le canal de dérivation 9 ou le passage 11.

L'ensemble de régulation fluidique 1 de la vanne 100 est représenté dans une configuration dans laquelle la position angulaire de la roue d'actionnement 16 est d'environ 130°. Cette position est référencée à la figure 2 par la lettre D. Dans cette position angulaire, le volet d'aiguillage 10 est en position d'obturation de la voie 11 et le volet de dosage 12 a une position angulaire d'environ 40°, c'est-à-dire que ce volet 12 ouvre partiellement la voie 2.

La figure 2 représente :
- en ordonnée, la position angulaire du volet de dosage 12 et du volet d'aiguillage 10,
- en abscisse, la position angulaire de la roue d'actionnement 16.

La courbe 60 représente la position angulaire du volet d'aiguillage 10 et la courbe 62 représente la position angulaire du volet de dosage 12.

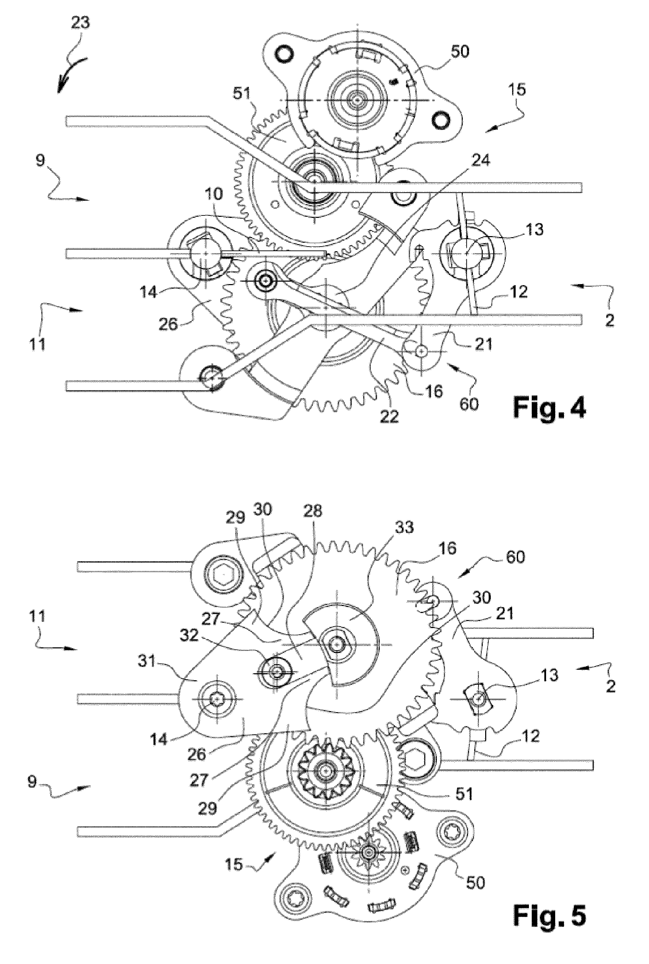

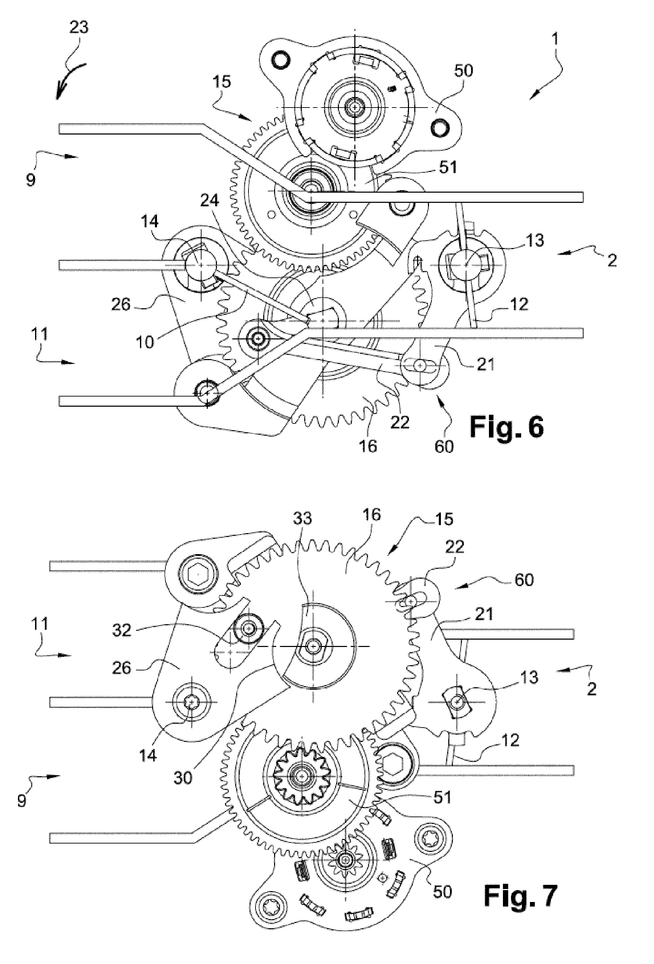

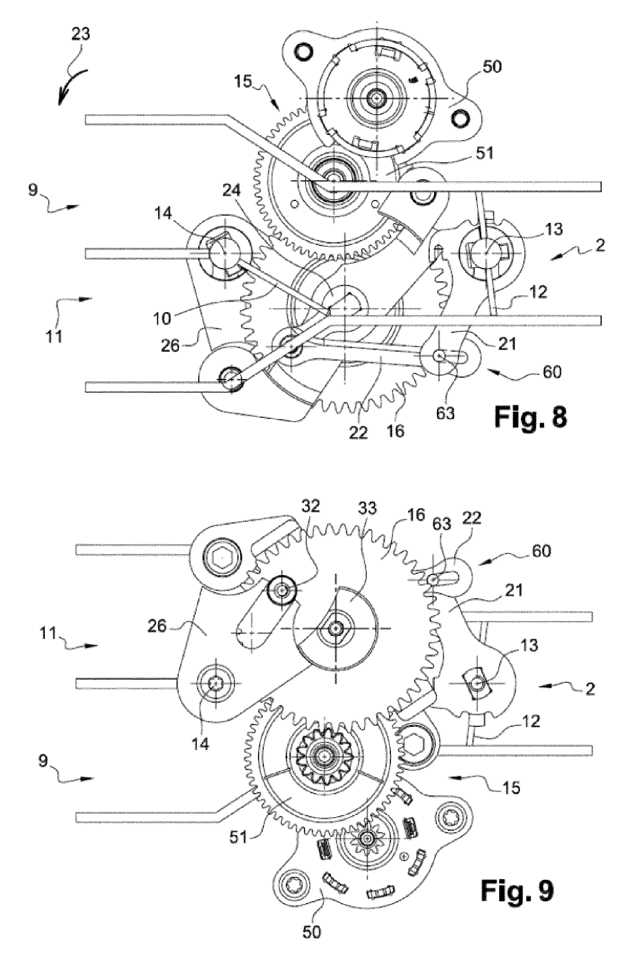

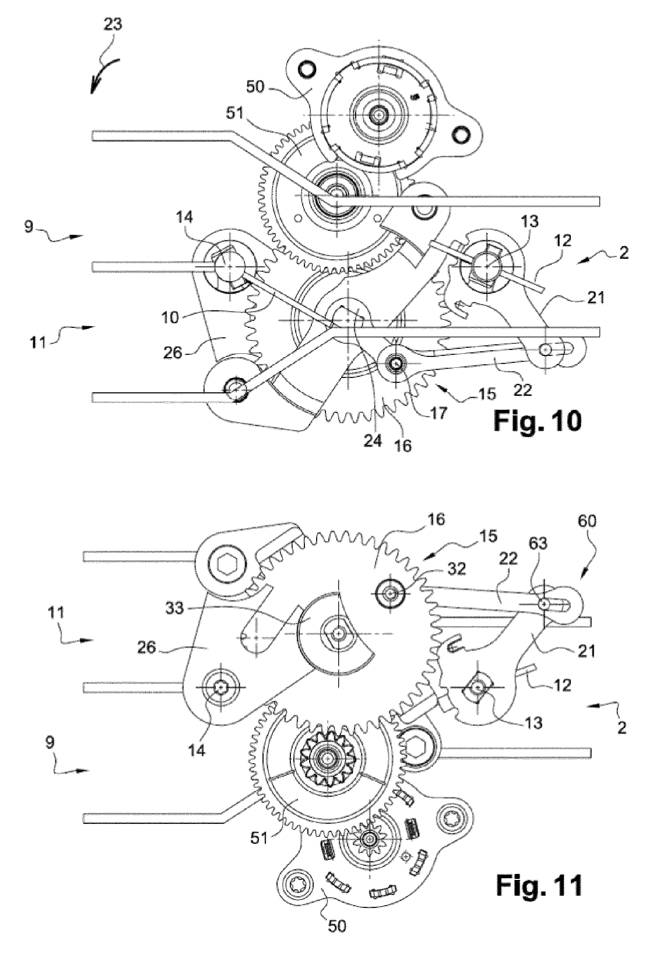

Les différentes positions angulaires du volet de dosage 12 et du volet d'aiguillage 10 représentées aux figures 3 à 11 sont ainsi visibles sur les courbes de la figure 2, a savoir :
- la position de repos A telle que représentée aux figures 4 et 5, pour une position angulaire de 0° de la roue d'actionnement 16,
- la position B telle que représentée aux figures 6 et 7 pour une position angulaire de 45° de la roue d'actionnement 16,
- la position C telle que représentée aux figures 8 et 9 pour une position angulaire de 60° de la roue d'actionnement 16,
- la position D telle que représentée à la figure 3 pour une position angulaire de 130° de la roue d'actionnement 16,
- la position E telle que représentée aux figures 10 et 11 pour une position angulaire de 170° de la roue d'actionnement 16.

Dans la position de repos A, le volet de dosage 12 est en position d'obturation de la voie 2 de sortie de la boucle EGR (position angulaire de 0°) et le volet d'aiguillage 10 est dans une position dans laquelle il n'obture ni la voie 9 ni la voie 11 (position angulaire de 0°). Dans cette position de repos A, la roue d'actionnement 16 à une position angulaire de 0°.

À partir de la position de repos A du dispositif d'actionnement 15, une mise en rotation de la roue d'actionnement 16 dans un premier sens (pour atteindre 199°) ou dans un deuxième sens opposé au premier sens (pour atteindre -148°) entraine :
- un pivotement du volet 12 de dosage toujours dans le même sens et marqué par une position angulaire maximale positive d'environ 75°,
- un pivotement du volet d'aiguillage, pour respectivement atteindre -30° ou 30°.

Autrement dit, quel que soit le sens de rotation de la roue 16 à partir de la position de repos A, le volet de dosage 12 pivote toujours dans le même sens avec une amplitude voisine de 75° à partir de la position dans laquelle il obture la voie 2 et le volet d'aiguillage 10 pivote dans un premier sens ou dans un deuxième sens, pour obturer l'une ou l'autre des voies 9 et 11.

Les courbes 60 et 62 définissent une première plage de fonctionnement 71, dans laquelle le dispositif d'actionnement 15 actionne le volet d'aiguillage 10 tout en laissant le volet de dosage 12 immobile. En effet, dans cette plage de fonctionnement 71, le volet de dosage reste en position d'obturation de la voie 2 (position angulaire d'environ 0°) et le volet d'aiguillage 10 pivote d'une position angulaire d'environ 30° à environ -30°. Le volet d'aiguillage 10 n'obture ni la voie 9 ni la voie 11 uniquement dans la première plage de fonctionnement 71. En d'autres termes, en dehors de la première plage 71, le volet d'aiguillage 10 obture l'une des voies 9 et 11. En dehors de la première plage 71, le volet de dosage n'obture pas la voie 2 et pivote pour faire varier la section de passage du fluide dans la voie 2.

Dans la première plage de fonctionnement 71, la roue d'actionnement tourne avec une amplitude voisine de 120° et la position de repos A est comprise dans la première plage de fonctionnement 71.

Dans la position de repos A, le volet d'aiguillage est dans une position médiane dans laquelle chacune des voies 9 et 11 est ouverte au maximum.

La position B est comprise dans la première plage de fonctionnement 71. Dans cette position B, le volet de dosage 12 est dans une position d'obturation de la voie 2 et le volet d'aiguillage est dans une position dans laquelle la voie 11 a une section de passage inférieure à celle de la voie 9.

La position C est comprise dans la première plage de fonctionnement 71. Cette position est celle prise par le dispositif d'actionnement juste avant de sortir de la première plage de fonctionnement 71. Dans cette position C, le volet d'aiguillage 10 est quasiment en position d'obturation de la voie 11 et le volet de dosage 12 est toujours en position d'obturation de la voie 2.

Les positions D et E sont en dehors de la première plage de fonctionnement 71. Dans ces positions, le volet de dosage ouvre la voie 2 et le volet d'aiguillage obture la voie 11.

Les figures 4, 6, 8, 10 (pour les vues de dessous) et respectivement 5, 7, 9 et 11 (pour les vues de dessus) illustrent l'ensemble de régulation fluidique 1 à quatre stades différents, partant de la position de repos A à la figure 4 pour arriver à la position E à la figure 11, la roue d'actionnement 16 tournant dans le sens matérialisé à la flèche 23 des figures 6, 8 et 10. Ce sens de rotation est celui qui est pris en observant la roue d'actionnement 16 sur les vues de dessous.

La rotation de la roue d'actionnement 16 entraine en rotation le levier 24 et la pièce de guidage 32.

La roue d'actionnement 16, le levier 22, la manivelle 21, le levier 24 et le volet de dosage 12 sont placés dans l'espace et sont agencés les uns par rapport aux autres, de telle manière que la mise en rotation de la roue d'actionnement 16, dans un sens ou dans l'autre, provoque par l'intermédiaire du levier 22, un déplacement du levier 22 relativement à la manivelle 21 dans le même sens ayant pour effet un déplacement de la cavité oblongue relativement au pion 63.

Le volet d'aiguillage 10 est mû en rotation au moyen d'un mécanisme de type « croix de malte », dont le principe repose sur une mise en rotation discontinue d'un objet en forme de croix de malte au moyen d'une rotation continue d'une pièce motrice interagissant avec ledit objet. Dans le cadre de l'invention, l'objet en forme de croix de malte est la pièce d'interface 26, qui a été solidarisée au volet 10. Cette pièce d'interface 26 comprend deux bras parallèles 27 ménageant entre eux la rainure 28 définissant un chemin de guidage, comme on le verra par la suite, et deux excroissances latérales 29, chacune desdites excroissances 29 étant placée de chaque coté de l'axe longitudinal de la rainure 28.

Un bras 27 et une excroissance 29 placés du même coté par rapport à l'axe longitudinal de la rainure 28 sont reliés l'un à l'autre par une surface en arc de cercle 30. La pièce d'interface 26 dispose d'une embase 31 alignée sur l'axe longitudinal de la rainure 28, l'axe reliant les deux excroissances 29 séparant ladite embase 31 et les deux bras 27. De cette manière, chaque bras 27 possède une extrémité implantée dans l'embase 31, et une autre extrémité qui est libre. Le volet 10 possède un axe de rotation 14 lui permettant de pivoter entre les deux positions d'obturation des deux voies 9,11, la pièce d'interface 26 étant rigidement fixée à une extrémité du volet 10 par l'intermédiaire de ladite embase 31. Plus précisément, la pièce d'interface 26 est fixée au volet 10 de manière à ce que l'embase 31 de la pièce d'interface 26 soit traversée par l'axe de rotation 14 du volet 10. Ainsi, la mise en rotation de la pièce d'interface 26 entraine simultanément la rotation du volet 10 autour de son axe de rotation 14 et la pièce d'interface 26 avec le même angle.

La pièce 32 de guidage est ici un ergot rapporté sur la roue d'actionnement 16 sur lequel coopère dans l'exemple décrit un roulement à billes. L'ergot 32 est par exemple cylindrique et placé en périphérie et émerge du plan de la roue d'actionnement 16 selon une direction perpendiculaire.

La pièce 33 de maintien est ici une fraction d'une autre roue coaxiale avec la roue d'actionnement 16, et est solidaire de celle-ci. Cette autre roue 33 est disposée dans la zone centrale de la roue d'actionnement 16. L'autre roue 33 émerge du plan de la roue 16 selon une direction perpendiculaire, et créé ainsi une surépaisseur. La section transversale de l'autre roue 33, qui est perpendiculaire à son axe de rotation, présente un contour circulaire sur plus de la moitié de sa circonférence, ainsi qu'un évidement délimité par un tronçon incurvé reliant le contour circulaire partiel pour fermer ladite section.

Les figures 4 et 5 illustrent le système d'actionnement 15 alors que les volets 10, 12 sont dans la position de repos A.

L'ergot 32 de la roue d'actionnement 16 est positionné au fond de la rainure 28. Les deux bras 27 de la pièce d'interface 26 occupent alors le creux laissé vacant par la pièce 33 de maintien, leur extrémité libre venant araser le tronçon incurvé de ladite pièce 33 de maintien.

Les leviers 22 et 24 sont alignés. Le volet de dosage 12 est rappelé en position d'obturation de la voie 2 par le ressort de rappel 18. Le pion 63 est situé à une extrémité de la cavité, un premier bord intérieur de la cavité étant à distance du pion 63 et un deuxième bord intérieur étant à proximité du pion 63. Le pion 63 et le deuxième bord intérieur peut laisser un jeu pour permettre un ajustement des pièces lors du montage de l'ensemble 1.

Le volet d'aiguillage 10 est dans une position ouvrant au maximum les voies 9 et 11.

En se référant aux figures 6 et 7, lorsque la roue 16 est mise en rotation, dans le sens matérialisé, pour la vue de dessous, par la flèche 23, à partir de la position de repos, l'ergot 32 provoque la mise en rotation de la pièce d'interface 26 et donc du volet d'aiguillage 10 qui lui est solidaire, en exerçant une poussée sur l'un des deux bras 27 bordant la rainure 28. La rotation de la roue d'actionnement 16 entraine en outre en rotation le levier 24 qui entraine le déplacement du levier 22. Le pion 63 coulisse à l'intérieur de la cavité oblongue 62 de sorte que la manivelle 21 reste immobile. En conséquence, le volet de dosage 12 reste en position d'obturation de la voie 2.

En se référent aux figures 8 et 9, le volet 10 atteint la position d'obturation de la voie 11 et le volet de dosage 12 reste dans la position d'obturation de la voie 2. Le pion 63 s'appuie sur le premier bord intérieur de la cavité. La manivelle 21 reste immobile et le volet de dosage 12 reste en position d'obturation de la voie 2.

En se référant aux figures 10 et 11, une fois que le volet d'aiguillage 10 est parvenu à sa position d'obturation de la voie 11, la roue d'actionnement 16 peut poursuivre sa rotation de manière à ce qu'un segment 30 en arc de cercle de la pièce d'interface 26 vienne en appui contre la pièce 33 de maintien, et plus spécifiquement contre la surface externe de la partie cylindrique de ladite pièce 33. Cette pièce 33 de maintien contribue à maintenir le volet d'aiguillage 10 dans une position d'obturation de la voie 11, en venant en appui contre un segment 30 en arc de cercle de la pièce d'interface 26. La rotation de la roue d'actionnement 16 continue d'entrainer en rotation le levier 24 qui poursuit le déplacement du levier 22. Le pion 63 provoque la mise en rotation de la manivelle 21 et donc du volet de dosage 12 qui lui est solidaire, en exerçant une poussée sur le premier bord intérieur de la cavité. Le volet de dosage 12 est ici représenté alors qu'il a une position angulaire d'environ 70°.

La rotation de la roue d'actionnement 16 peut se poursuivre, toujours dans le même sens, jusqu'à ce que le volet de dosage 12 atteigne une position d'ouverture maximale pour permettre aux gaz d'échappement de passer dans la voie 2 avec un débit maximal. Ainsi, le réglage du degré d'ouverture du volet de dosage 12 s'effectue par un pivotement dudit volet 12 de dosage commandé par la roue d'actionnement 16, alors que le volet d'aiguillage 10 demeure dans une position d'obturation de la voie 11. A tout moment, la roue d'actionnement 16 peut être mise en rotation dans le sens opposé pour ajuster la position d'ouverture du volet de dosage 12 en réduisant le débit des gaz dans la voie 2.

La position d'ouverture maximale du volet de dosage 12 est atteinte lorsque le volet 12 atteint une position angulaire de 75°. Cette position est atteinte lorsque la roue d'actionnement 16 vient par exemple en butée sur une butée d'arrêt non représentée.

La roue d'actionnement 16 peut également être mise en rotation dans le sens opposé au sens matérialisé par la flèche 23 des figures 6, 8 et 10.

Si le volet d'aiguillage est en position d'obturation de la voie 11, par exemple comme dans la position E représentée aux figures 10 et 11, une rotation de la roue d'actionnement 16 dans le sens opposé au sens matérialisé par la flèche 23 entraine en rotation l'ergot 32 et le levier 24. L'ergot tourne ainsi dans la direction lui permettant de retourner dans la rainure 28. Le levier 24 entraine le déplacement du levier 22. Le premier bord intérieur de la cavité 62 exerce alors une poussée sur le pion 63 inférieure à la poussée qu'exerce le ressort de rappel sur le volet de dosage 12. En conséquence, le volet 12 est actionné par le ressort de rappel 18 pour diminuer la section de passage des gaz dans la voie 2.

La rotation de la roue d'actionnement 16 peut se poursuivre dans le même sens de rotation de sorte que le volet de dosage 12 obture la voie 2. L'ensemble arrive alors dans la position C. La roue d'actionnement 16 poursuivant alors sa rotation dans le même sens, l'ergot 32 entre dans la rainure 28 et provoque la mise en rotation de la pièce d'interface 26 et donc du volet d'aiguillage 10 qui lui est solidaire, en exerçant une poussée sur l'un des deux bras 27 bordant la rainure 28. Le pion 63 coulisse dans la cavité 62 étant donné que le volet de dosage 12 est maintenu en position d'obturation de la voie 2 par le ressort de rappel 18 et que le levier 22 poursuit son déplacement. La rotation de la roue d'actionnement 16 peut se poursuivre dans le même sens de rotation de sorte que le volet de dosage 12 obture la voie 2 et le volet d'aiguillage 10 ouvre au maximum les voies 9 et 11. L'ensemble arrive alors dans la position de repos A aux figures 4 et 5.

Tout ce qui a été décrit précédemment concernant la cinématique de pivotement du volet d'aiguillage 10 pour obturer la voie 11, demeure également valable lorsque ledit volet 10 vient obturer la voie 9, c'est-à-dire lorsque la roue d'actionnement 16 tourne dans le sens opposé à celui de la flèche 23 à la figure 6 alors que l'ensemble 1 est dans la position de repos. La cinématique de pivotement du volet de dosage 12 demeure également valable.

Nous allons maintenant décrire un capteur 110 capable de mesurer une position angulaire du dispositif d'actionnement 15 de manière à permettre la commande de la vanne 100, comme visible sur la figure 1.

Ce capteur 110 est capable de mesurer cette position angulaire :
- avec une première grande sensibilité HR1 lorsque la position angulaire est dans une plage de grande sensibilité P1,
- avec une faible sensibilité LR lorsque la position angulaire est dans une plage de faible sensibilité P2,
- avec une deuxième grande sensibilité HR2 lorsque la position angulaire est dans une deuxième plage de grande sensibilité P3, les sensibilités HR1 et HR2 étant supérieures à LR.

Dans l'exemple décrit, comme on peut le voir sur la figure 2 :
- La première plage de grande sensibilité P1 s'étend de la position F1 du dispositif d'actionnement jusqu'à la position F2.
- La deuxième plage de grande sensibilité P3 s'étend de la position F3 du dispositif d'actionnement jusqu'à la position F4.
- La plage de faible sensibilité P2 s'étend de la position F2 du dispositif d'actionnement jusqu'à la position F3, cette plage de faible sensibilité étant entre les deux plages de grande sensibilité, autrement dit les plages de grande sensibilité sont de part et d'autre de la plage de faible sensibilité.

Dans l'exemple décrit, la position F1 correspond à l'angle du dispositif d'actionnement 15 pour lequel on a simultanément l'organe de dosage 12 en position d'ouverture maximale de la voie 2 et l'organe d'aiguillage 10 en position d'obturation de la voie 9. Le fluide s'écoule alors dans la voie 11.

La position F2 correspond elle à l'angle du dispositif d'actionnement 15 pour lequel l'organe de dosage 12 atteint la position d'obturation de la voie 2, l'organe d'aiguillage 10 étant en position d'obturation de la voie 9.

La position F3 correspond elle à l'angle du dispositif d'actionnement 15 pour lequel l'organe d'aiguillage 10 commence à ouvrir la voie 2, l'organe d'aiguillage étant en position d'obturation de la voie 11.

La position F4 correspond à l'angle du dispositif d'actionnement 15 pour lequel on a simultanément l'organe de dosage 12 en position d'ouverture maximale de la voie 2 et l'organe d'aiguillage en position d'obturation de la voie 11. Le fluide s'écoule alors dans la voie 9.

Afin de déterminer avec précision la position des points F2 et F3, on peut opérer de la façon suivante : alors que la roue d'entrainement est dans la position A pour laquelle le volet de dosage est totalement fermé et le volet d'aiguillage n'obture aucune des 2 voies, on bloque le volet de dosage dans sa position fermée, par l'intermédiaire d'un outillage venant appuyer sur le volet, cet outillage n'étant pas décrit sur les figures. On commande ensuite le dispositif d'actionnement dans un sens, par exemple dans le sens positif de la mesure de l'angle du dispositif d'actionnement 15. Celui-ci va ainsi pouvoir tourner jusqu' à la position où le volet de dosage voudrait commencer à pivoter s'il n'était pas bloqué en position par l'outillage. La position obtenue correspond au point F3. A ce moment, on calibre le capteur afin que son signal de sortie soit égal à V3.

La calibration du capteur est une fonctionnalité incorporée dans la plupart des capteurs disponibles commercialement, qui permet l'utilisateur de fixer le niveau de signal à un niveau choisi, pour un certain nombre de positions, par exemple quatre. Ensuite, on commande le dispositif d'actionnement dans l'autre sens, c'est-à-dire dans le sens négatif de la mesure d'angle du dispositif d'actionnement 15. Comme précédemment, celui-ci va pouvoir tourner jusqu' à la position où le volet de dosage voudrait commencer à pivoter s'il n'était pas bloqué en position par l'outillage. La position obtenue correspond au point F2. On calibre alors le capteur afin que son signal de sortie soit égal à V2.

L'outillage permettant de bloquer le volet de dosage est ensuite retiré afin que le volet de dosage puisse pivoter normalement. On pourra alors déterminer la position précise des points F1 et F4 de la façon suivante :
on commande ensuite le dispositif d'actionnement dans le sens positif de la mesure d'angle, jusqu'à la valeur maximale accessible, correspondant à la première butée mécanique. La position obtenue correspond à la position F4, le volet de dosage étant alors ouvert à fond et le volet d'aiguillage obturant alors la voie 11. On calibre alors le capteur afin que son signal de sortie soit égal à V4.

Finalement, on commande le dispositif d'actionnement dans le sens négatif de la mesure d'angle, jusqu'à la valeur minimale accessible, correspondant à la seconde butée mécanique. La position obtenue correspond à la position F1, le volet de dosage étant alors ouvert à fond et le volet d'aiguillage obturant alors la voie 9. On calibre alors le capteur afin que son signal de sortie soit égal à V1.

Cette procédure pourra être réalisée de façon individuelle sur toutes les pièces fabriquées. Les valeurs V1, V2, V3, V4 sont constantes d'une pièce produite à l'autre.

Ainsi, même si les dispersions dimensionnelles entre pièces, inévitables dans une production en grande série, font varier la position angulaire des points F1, F2, F3, F4, la tension de sortie délivrée par le capteur pour chacune de ces positions sera toujours identique. La précision de la régulation du débit s'en trouve améliorée par rapport à une vanne où la dispersion des positions F1, F2, F3, F4 ne serait pas prise en compte.

La figure 12 compare les courbes de réponses d'un capteur selon l'état de l'art et du capteur 110. Les deux courbes C1 et C2 tracent la tension de sortie fournie par les capteurs en fonction de l'angle de rotation du dispositif d'actionnement 15. La sensibilité du capteur est mise en évidence par la pente de la courbe de la tension en fonction de l'angle du dispositif d'actionnement.

La courbe C1 en pointillés illustre un capteur connu dans l'état de l'art, pour lequel la sensibilité est constante quelque soit la plage angulaire. En conséquence la courbe de réponse de la tension de sortie en fonction de l'angle de rotation est une droite.

Sur la courbe C2 en trait plein, la sensibilité dépend de la plage angulaire. Sur cet exemple on peut voir 2 plages de grande sensibilité P1, P3 et une plage de faible sensibilité P2.

La plage P3 est plus large que la plage P2, elle-même plus large que la plage P1. Parmi les 2 zones de haute sensibilité décrites, la valeur de la sensibilité est plus élevée dans la plage P3 que dans la plage P2.

A l'intérieur de chacune des plages P1, P2, P3 le signal évolue linéairement. La courbe de réponse de la tension en fonction de l'angle est formée de trois segments de droite.

Ainsi, la variation de tension dans la plage P1 est augmentée sur la courbe C2 par rapport à la courbe C1. Par conséquent les variations de la position angulaire dans cette plage peuvent être plus finement mesurées.

Il en est de même dans la plage P3.

Par contre , la variation de tension dans la plage angulaire P2, dans laquelle l'organe d'aiguillage passe d'un position d'obturation à une autre, est nettement réduite par rapport à la courbe C1, caractéristique d'un capteur à sensibilité constante. Les variations de position angulaire dans cette plage sont moins finement mesurées, mais cette situation ne crée pas d'inconvénient car le besoin de précision est faible dans cette zone.

La courbe de réponse du capteur de position privilégie les zones où le besoin de précision est le plus important pour assurer un bon contrôle de l'ensemble de régulation fluidique décrit.

Au total, la rotation de l'organe d'actionnement entre les points F1 et F4 se déroule sur pratiquement 360 degrés.

Le rapport entre la valeur de l'une des grandes sensibilités et la valeur de la faible sensibilité vaut au minimum 2, afin d'obtenir un avantage significatif. De préférence, un rapport au moins égal à 4 sera utilisé.

L'exemple de la figure 12 décrit un capteur de type analogique, délivrant une tension fonction de l'angle à mesurer. Le même principe peut s'appliquer à un capteur de type numérique, c'est-à-dire délivrant une information numérique codée sur un certain nombre de bits. Dans ce cas, le signal analogique reçoit le traitement décrit ci-dessus avant d'être transformé par l'étage de conversion analogique / numérique du capteur.

## Revendications

1. Capteur (110) notamment pour un composant de véhicule automobile, ce capteur étant capable de mesurer une propriété physique d'un composant:
- avec une première sensibilité lorsque la propriété physique est dans une plage de grande sensibilité,
- avec une deuxième sensibilité lorsque la propriété physique est dans une plage de faible sensibilité, la première sensibilité étant supérieure à la deuxième sensibilité.

2. Capteur (110) selon la revendication précédente, **caractérisé par le fait que** le capteur (110) est agencé pour générer deux plages de grande sensibilité (P1,P3) et une plage de faible sensibilité (P2).

3. Capteur (110) selon la revendication précédente, **caractérisé par le fait que** les plages de grande sensibilité (P1,P3) sont de part et d'autre de la plage de faible sensibilité (P2).

4. Capteur (110) selon l'une des revendications précédentes, **caractérisé par le fait que** la valeur de la grande sensibilité est au moins deux fois, notamment au moins quatre fois plus grande que celle de la faible sensibilité.

5. Capteur (110) selon l'une des revendications précédentes, **caractérisé par le fait que** le capteur est agencé pour délivrer un signal de type analogique.

6. Capteur (110) selon l'une des revendications 1 à 4, **caractérisé par le fait que** le capteur est agencé pour délivrer des signaux de type numérique.

7. Capteur (110) selon l'une des revendications précédentes, **caractérisé par le fait que** la propriété physique mesurée par le capteur est une position d'un dispositif d'actionnement (15).

8. Capteur (110) selon l'une des revendications précédentes, **caractérisé par le fait que** la propriété physique mesurée par le capteur est une position angulaire.

9. Ensemble de régulation fluidique (1) d'une vanne (100) ayant au moins trois voies, notamment pour véhicule automobile, l'ensemble (1) comprenant :
- un organe de dosage (12) mobile agencé pour sélectivement ouvrir ou obturer une première (2) des trois voies,
- un organe d'aiguillage (10) mobile agencé pour obturer sélectivement une deuxième (9) ou une troisième (11) des trois voies,
- un dispositif d'actionnement (15) des deux organes (10, 12),
- au moins un capteur capable de mesurer une propriété physique du dispositif d'actionnement :
i. avec une première sensibilité lorsque la propriété physique est dans une plage de grande sensibilité,
ii. avec une deuxième sensibilité lorsque la propriété physique est dans une plage de faible sensibilité, la première sensibilité étant supérieure à la deuxième sensibilité.

10. Ensemble (1) selon la revendication précédente, comportant des première et deuxième plages de grande sensibilité (P1,P3), **caractérisé par le fait que** :
- la première plage de grande sensibilité (P1) s'étend de la position du dispositif d'actionnement correspondant à la position (F1) d' ouverture maximale de l'organe de dosage (12), jusqu'à la position (F2) correspondant à la position fermée de l'organe de dosage, l'organe d'aiguillage (10) étant immobile dans cette plage et obturant la deuxième voie (9),
- la deuxième plage de grande sensibilité (P3) s'étend de la position (F3) du dispositif d'actionnement correspondant à la position fermée de l'organe de dosage (12) jusqu'à la position (F4) correspondant à la position d'ouverture maximale de l'organe de dosage (12), l'organe d'aiguillage (10) étant immobile dans cette plage et obturant la troisième voie (11)
- la plage de faible sensibilité (P2) s'étend de la position (F2) du dispositif d'actionnement jusqu'à la position (F3), l'organe de dosage (12) étant en position d'obturation de la première voie (2) dans cette plage et l'organe d'aiguillage (10) passant de la position d'obturation de la deuxième voie (9) à la position d'obturation de la troisième voie (11).

11. Ensemble (1) selon la revendication précédente, le dispositif d'actionnement (15) comportant au moins une roue d'actionnement mobile en rotation pour l'actionnement commun de l'organe de dosage (12) et de l'organe d'aiguillage (10).

12. Vanne (100) comportant l'ensemble de régulation fluidique (1) selon l'une des revendications 9 à 11.

13. Procédé de mesure d'une propriété physique d'un composant, ce procédé comportant les étapes suivantes :
- mesurer la propriété physique avec une première sensibilité lorsque la propriété physique est dans une plage de grande sensibilité,
- mesurer la propriété physique avec une deuxième sensibilité lorsque la propriété physique est dans une plage de faible sensibilité, la première sensibilité étant supérieure à la deuxième sensibilité.

14. Procédé selon la revendication précédente, **caractérisée par le fait que** la propriété physique mesurée est une position angulaire d'une vanne.

15. Procédé selon l'une des revendications 13 ou 14, **caractérisé par le fait qu'**une calibration individuelle des caractéristiques du capteur est réalisée afin que la tension délivrée pour chacune des positions correspondant à une borne des différentes plages de sensibilité définies soit constante.
